# EUROPEAN PATENT APPLICATION

(11) **EP 0 525 693 A1**
(43) Date of publication of application: **03.02.1993**
(21) Application number: 92112764.3
(22) Date of filing: 27.07.1992
(51) Int. Cl.: F16K 15/03, F16K 15/18, F16K 27/02

(54) **Improved nonreturn valve, particularly for fluids**

(30) Priority: 30.07.1991 IT TV910077
(71) Applicant: F.A.T. SNC DI ZANETTE VITTORIO & C., F-31030 Pero di Breda di Piave (TV) (IT)
(72) Inventor: Zanette, Vittorio, I-31020 Pero di Breda di Piave (TV) (IT)
(74) Representative: D'Agostini, Giovanni, Dr.

(57) **Abstract**

Improved nonreturn valve, particularly for fluids, of a type connectable to an pipe endowed with a respective means for the connection substantially composed by a free and articulated rocker, keyed inside the valve body, on which an obturator is hinged on one side being therefore able to be raised and viceversa by an abutment bushing pledged in correspondence of the transit hole of the fluid, while on the opposite end of said rocker an independent means of raising of said obturator is operative, characterized by the fact that a resilient yielding means inside of the valve body draws or compresses the obturator on the bushing acting in contraposition to the direction of the fluid.

## Description

The object of this invention is an improved nonreturn valve, particularly for fluids.

The innovation finds a particular even if not exclusive application in the sector of hydraulic supplies in general, including heating plants.

Nonreturn valves are already known in accordance with prior art. Those more commons consist in the traditional lever that used manually, determines the rotation of a obturator that closes or opens the circuit of a pipe. These are usually utilized in thermo-hydraulics and in particular are disposed along a normal pipe, placed in a vertical or horizontal sense. More recent valves instead are usually of an automatic cd. type, composed of a metallic body, connectable at the ends to said pipe and have an essentially cylindric form, in which internally cooperates a obturator of a type pushed on the head by a preloaded spring placed in a contraposition to the sense of the advancing fluid. The obturator is generally keyed on a pivot, perpendicular to it and slidable inside a guide obtained at the internal of the body of the valve. The position assumed by the "instant for instant" obturator is in equilibrium between the dynamic action exerted by the fluid in transit in the valve, like this pressing the obturator, and the reaction of the spring. Said valve is furthermore equipped with a known seal placed in a ring fashion in correspondence of the abutment surface of said obturator. Other types of nonreturn valves are also known, but all substantially based on the analog principle and comprising insignificant differences.

Noticeable drawbacks in such solutions can be different. First of all we must observe the necessity to resort to manual actuation in some of these, which that logically don't allow rapid interventions for the performance of the main function of said valve. In others it is moreover noticeable the complexity of the mechanism that involves a constant and difficult access for the maintenance, along with the lack of versatility, being that it is practically impossible to intervene on the technical characteristics of the valve to be adapted to the different exigencies of the case which mainly depend on the more or less density of the fluid in transit. In this case an analog valve duly adjusted corresponds to each fluid gender more or less dense. Furthermore, we point out a verified cd. drawing or the interposition of soil between the seal and the obturator which determines a bad functioning of the valve that even when in a rest position lets a certain quantity of fluid pass all the same. Such a phenomenon is more accentuated by the wear of the seal and also depends on the high temperatures that in such case can cause soil to enter and be trapped in the seal and therefore does not allow a complete closure of the obturator. Other drawbacks can be the vibrations caused by movement that are consequently noisy and also the fact that in some plants, in order to consent the emptying of the water column, the integration of a second valve is necessary of a manual type.

A valid and effective solution to the above problems is conferred by the same applicant with the application of the industrial invention No. 82507 A/89 of Dec. 10, 1989 of which object is a "nonreturn valve, particularly for fluids". In the same, the invention consisted in a valve, connectable to a pipe and endowed with a respective means for the connection which is substantially composed by a rocker keyed inside the valve body which has an obturator hinged on one side being therefore possible to be raised and viceversa by an abutment bushing pledged in correspondence of the opening for the advancing fluid, while on the opposite end of said rocker an independent raising means of said obturator can act.

However also in said solution there is a drawback which consists essentially in the fact that it cannot be connected particularly to pipes placed horizontally, and vertically with a descendant fluid flow, also those horizontal with a descendant flow being angular, and finally those with a vertical descendant flow and a horizontal angle of exit. In practice the utilization of such valve is at present limited only in some determined positions, in the case in point, only when the advancing flow is rising.

The aim of this invention is to obviate to the above-mentioned drawbacks.

This and other aims are reached with this innovation according to the characteristics of the following claims solving the exposed problems by means of an improved nonreturn valve, particularly for fluids of a type connectable to an endowed pipe with a respective means for the connection and substantially consisting in a free, articulated rocker keyed inside of the valve body, which on one side is joined to an obturator being like this raisable and viceversa by an abutment bushing pledged in correspondence of the opening for the fluid while on the opposite end of said rocker an independent means operates to raise said obturator, in which a resilient yielding means compresses the obturator on the bushing, acting in a contraposition to the direction of the advancing fluid flow.

In such a way by the important creative contribution which effect realizes an immediate technical progress, different advantages are achieved, among which it is possible to note above all the fact that the realization of the device is particularly simplified, and that the device is also easily accessible, for both normal maintenance and for the replacement of eventual components. Furthermore, it optimizes the yield and use, making it possible to be placed in any position of the pipe, independent of the fluid flow, ascendant or descendant. It lastly allows , by means of a manual operation, the discharge of the water column without intervening with detailed and complex mechanisms.

These and other advantages appear by the description of the specified successive preferential solutions for realization with the help of the following schematic drawing of which execution details not are to be considered limitative.
Figure 1 represents a view of a longitudinal section of a rocker valve of a type for a horizontal pipe.
Figure 2 represents a view of a longitudinal section of a rocker valve of the type for a vertical pipe 1 with a descendant flow .
Figure 3 represents a view of a longitudinal section of a rocker valve of a type for a horizontal pipe with an exit at 45 for a descendent flow
Figure 4 represents a longitudinal section view of an rocker valve of the type for a pipe with a vertical opening for a descendant flow and a horizontal exit being placed at 45 °.

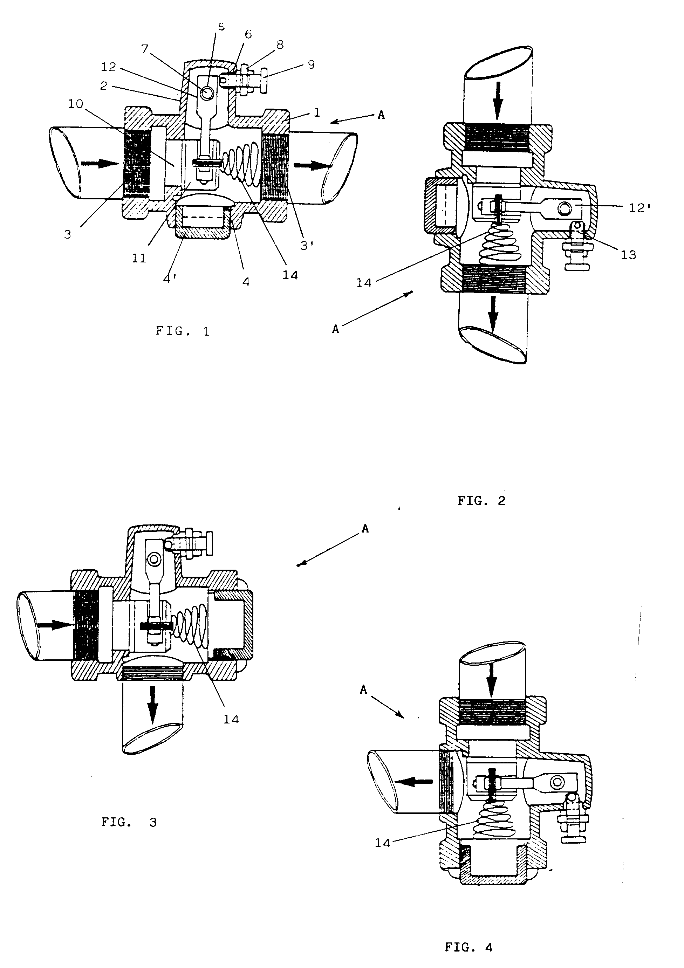

Referring to the figures it is disclosed that a nonreturn valve with rocker of the type (A) is composed by a hollow metallic body, in this case in cast-iron with its seats in brass, conformed according to an intersection on the perpendicular axes of two cylinders (1, 2) and conveniently connectable to an input fluid pipe and an exit fluid pipe. Said valve provides two openings (3, 3') that consent the transit of the fluid, respectively, an entrance and an exit, disposed perpendicularly one to the other or at 45 as illustrated in the Figures 3 and 4. A third hole (4) adjacent to the previous, allows the access inside of the valve body (A) being closed by a special threaded plug (4'). On one side of the valve body, are obtained another two holes but of reduced sizes (5, 6), the first (5) for a pivot (7) that protracts internally in the valve body, the second (6) for a support (8) of the movement button or presser (9) of the rocker (12). Inside the valve body (A) and interposed between the two openings (3, 3'), a bushing is pledged (10) integral to said valve body (A) being internally inserted with pressure and constituenting, in a ring fashion, a means for the abutment of a obturator (11). Said pushed on the head obturator (11) is of form essentially cylindric and is connected to a lever or rocker (12), on which it pivots in a way not rigid or articulated, while by the other side the lever (12) is keyed on the pivot (7). The articulated pivoting of the obturator (11) to the lever (12) is obtained by means of a slight widening of the respective reception holes, the first obtained transversely to the obturator (11), receiving internally the lever (12); the second obtained perpendicular to the first and in correspondence to the end intercepting the lever (12) by means of a passing pivot. A part of the lever (12) is protracted beyond the coincident axis with the hinging of the same realizing the abutment surface (12') for a plug (13) able to be operated manually by means of pressing the button (9) which is also adjustable being its respective reception seat and support (8) threaded. Furthermore a contrast spring is disposed between the shoulder of the support (8) of the container of the button (9) and the same button. Furthermore a helical spring, or another resilient yielding means (14) is interposed between the presser head (11) and the valve body. More in particular an end of the spring is disposed on the head of the obturator (11) while the opposite end is pledged in a ring fashion to the access hole (4, 4') or depending of the characteristics of the valve body, on the exit (3'). In such a way the obturator (11), in the stop condition is maintained resiliently in abutment on the bushing (10). With the fluid not in transit, for the effect of the water column above, and for the compression action determined by said spring (14), and whatever is the disposition and conformation of the valve (A), the rocker obturator (11) is disposed in abutment of the bushing (10) preventing the downflow of the fluid in the downwards pipe. Inversely with the fluid in movement the obturator (11) rises being hinged by the rocker (12) to the valve body compressing the spring (14) that at the same time exerts a force opposite to the sense of advancement of the fluid and of equilibrium depending on the pressure used. Lastly the constant maintenance is allowed of the obturator (11) raised in respect to the bushing (10) by means of actuating the pressure button (9) which exercises a pressure on the projecting part (12'), allowing the raising of the rocker (12) and relative obturator (11).

## Claims

1. Improved nonreturn valve, particularly for fluids, of a type connectable to an pipe endowed with a respective means for the connection substantially composed by a free and articulated rocker, keyed inside the valve body, on which an obturator is hinged on one side being therefore able to be raised and viceversa by an abutment bushing pledged in correspondence of the transit hole of the fluid, while on the opposite end of said rocker an independent means of raising of said obturator is operative, characterized by the fact that a resilient yielding means inside of the valve body draws or compresses the obturator on the bushing acting in contraposition to the direction of the fluid.

2. Improvement according to claim 1., characterized in that the resilient yielding means compressing the obturator (11) consists in one spring (14) that at one end is disposed on the head of the obturator (11) while at the opposite end it is pledged in a ring fashion at the access hole (4, 4') or depending of the characteristics of the valve body, at the exit (3'). Udine, July 22, 1992.
